# EUROPEAN PATENT APPLICATION

(11) **EP 2 026 181 A2**
(43) Date of publication of application: **18.02.2009**
(21) Application number: 08011357.4
(22) Date of filing: 23.06.2008
(51) Int. Cl.: G06F 3/048

(54) **Mobile terminal and method of controlling operation of the same**

(30) Priority: 17.08.2007 KR 20070082879
(71) Applicant: LG Electronics Inc., Seoul 150-010 (KR)
(72) Inventor: Ahn, Hyun Ju, Seoul 153-023 (KR)
(74) Representative: Katérle, Axel

(57) **Abstract**

A method of controlling an operation of a terminal. The method includes displaying a pointer on a screen of the terminal, moving a display location of the pointer towards a text input region on the screen, switching the pointer to a cursor indicating a text input position within the text input region when the pointer enters the text input region, and allowing text to be input into the text input region without an additional command when the pointer is switched to the cursor indicating the text input position.

## Description

### BACKGROUND OF THE INVENTION

### 1. Field of the Invention

The present invention relates to a mobile terminal and a corresponding method of switching a pointer to a cursor indicating a text input region on the mobile terminal when the pointer is moved into the text input region such that text can be input into the text input region without the user having to enter an additional input command.

### 2 Discussion of Related Art

Mobile terminals now include many additional services beside the basic call service. For example, users can now access the Internet, play games, listen to music, watch videos or broadcast programs, send and receive text and voice messages, etc. using their mobile terminal. Many mobile terminals also now provide video calling services such that users can see each other via video while simultaneously talking with each other.

In addition, because the mobile terminals include such a variety of functions, the menu options provided on the mobile terminal have also increased significantly. Thus, the mobile terminals now include sophisticated graphical user interfaces that assist the user in navigating through the various menu options.

The mobile terminal also include directional keys or other input buttons or commands that allow a user to move a cursor on the display of the mobile terminal so as to select a variety of different functions. For example, the user can move a cursor from a non-text input region into a text input region, and between menus provided on the display. However, the cursor is displayed as a pointer when the user moves the cursor, and is only changed into a different type of cursor upon the user selecting an additional input command (e.g., by clicking the left mouse button). Thus, the user has to unnecessarily perform multiple input commands to traverse through the different portions of the screen.

### SUMMARY OF THE INVENTION

Accordingly, one object of the present invention is to address the above-noted and other problems.

Another object of the present invention is to provide a mobile terminal and corresponding method for switching a pointer to a cursor indicating a text input region and allowing text to be input into the text input region without an additional input command having to be entered.

To achieve these and other advantages and in accordance with the purpose of the present invention, as embodied and broadly described herein, the present invention provides in one aspect a method of controlling an operation of a terminal. The method includes displaying a pointer on a screen of the terminal, moving a display location of the pointer towards a text input region on the screen, switching the pointer to a cursor indicating a text input position within the text input region when the pointer enters the text input region, and allowing text to be input into the text input region without an additional command when the pointer is switched to the cursor indicating the text input position.

In another aspect, the present invention provides a terminal including a display screen configured to display a pointer, an input unit configured to move a display location of the pointer towards a text input region on the screen, and a controller configured to switch the pointer to a cursor indicating a text input position within the text input region when the pointer enters the text input region, and to allow text to be input into the text input region without an additional command when the pointer is switched to the cursor indicating the text input position.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:

FIG. 1 is a block diagram of a mobile terminal according to an embodiment of the present invention;

FIG. 2 is a front perspective view of the mobile terminal according to an embodiment of the present invention;

FIG. 3 is a rear perspective view of the mobile terminal according to an embodiment of the present invention;

FIG. 4 is a flowchart illustrating a method of controlling an operation of the mobile terminal according to an embodiment of the present invention;

FIG. 5 is an overview of a screen of a mobile terminal in which a pointer is moved into a text input region according to an embodiment of the present invention;

FIG. 6 is an overview of a screen of a mobile terminal in which the pointer moved into the text input region is changed into a cursor indicating text input is possible according to an embodiment of the present invention;

FIG. 7 is an overview of a screen of a mobile terminal in which the cursor indicating text input is possible is moved along with text input into the text input region according to an embodiment of the present invention;

FIG. 8 is an overview of a screen of a mobile terminal in which the cursor indicating text input is possible is moved by a user according to an embodiment of the present invention; and

FIG. 9 is an overview of a screen of a mobile terminal in which the pointer changed into the cursor indicating text input is possible is changed back to the pointer when the cursor is moved outside of the text input region according to an embodiment of the present invention.

### DETAILED DESCRIPTION OF THE INVENTION

The present invention will now be described in detail in connection with specific embodiments with reference to the accompanying drawings.

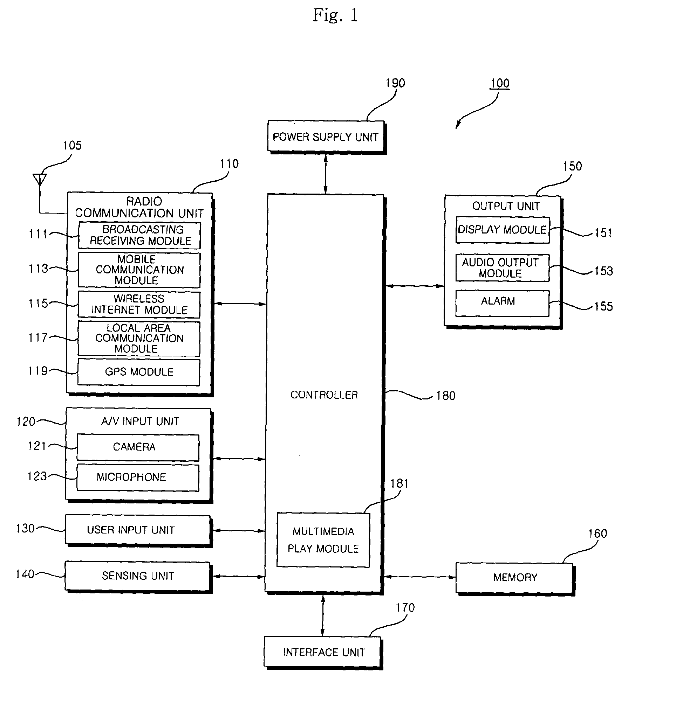

FIG. 1 is a block diagram of a mobile terminal 100 according to an embodiment of the present invention. As shown, the mobile terminal 100 includes a radio communication unit 110, an A/V (Audio/Video) input unit 120, a user input unit 130, a sensing unit 140, an output unit 150, a memory 160, an interface unit 170, a controller 180, and a power supply unit 190.

The radio communication unit 110 includes a broadcasting receiving module 111, a mobile communication module 113, a wireless Internet module 115, a local area communication module 117, a GPS (Global Positioning System) module 119, and so on. In addition, the broadcasting receiving module 111 receives at least one of broadcasting signals and broadcasting-related information from an external broadcasting management server through a broadcasting channel.

The broadcasting channel may include a satellite channel, a terrestrial wave channel or the like. Also, the broadcasting management server may refer to a server that generates and sends at least one of broadcasting signals and broadcasting-related information, or a sever that receives at least one of previously generated broadcasting signals and previously generated broadcasting-related information and sends it to the device.

In addition, the broadcasting-related information may refer to information pertinent to broadcasting channels, broadcasting programs and/or broadcasting service providers. The broadcasting signals may include not only TV broadcasting signals, radio broadcasting signals, and data broadcasting signals, but also broadcasting signals in which TV broadcasting signals or radio broadcasting signals are combined with data broadcasting signals.

Further, the broadcasting-related information can be provided through a mobile communication network. The broadcasting-related information can be received by the mobile communication module 113. Also, the broadcasting-related information may exist in various forms. For example, the broadcasting-related information may exist in the form of an EPG (Electronic Program Guide) of the DMB (Digital Multimedia Broadcasting) system, an ESG (Electronic Service Guide) of the DVB-H (Digital Video Broadcast-Handheld) system or the like.

In addition, the broadcasting receiving module 111 receives broadcasting signals using various broadcasting systems. In particular, the broadcasting receiving module 111 can receive broadcasting signals using digital broadcasting systems such as the DMB-T (Digital Multimedia Broadcasting-Terrestrial) system, the DMB-S (Digital Multimedia Broadcasting-Satellite) system, the MediaFLO (Media Forward Link Only) system, the DVB-H (Digital Video Broadcast-Handheld) system, and the ISDB-T (Integrated Services Digital Broadcast-Terrestrial) system.

Further, the broadcasting receiving module 111 can be configured to be suitable for not only the above digital broadcasting systems, but also all broadcasting systems providing broadcasting signals. In addition, broadcasting signals and/or broadcasting-related information received through the broadcasting receiving module 111 can be stored in the memory 160.

Also, the mobile communication module 113 transmits or sends radio signals to or from at least one of a base station, an external terminal server, and a server on a mobile communication network. The radio signals may include data of various forms according to the transmission/reception of voice call signals, video telephony signals, or text/multimedia messages.

In addition, the wireless Internet module 115 refers to a module for accessing the wireless Internet. The wireless Internet module 115 can be embedded in the mobile terminal 100 or disposed outside the mobile terminal 100. Further, the local area communication module 117 refers to a module for local area communication. For example, a local area communication technology may employ Bluetooth, RFID (Radio Frequency Identification), IrDA (infrared Data Association), UWB (Ultra Wideband), ZigBee or the like. Also, the GPS module 119 receives position information from a plurality of GPS satellites.

In addition, the A/V input unit 120 is configured to input audio signals or video signals and includes a camera 121, a microphone 123, etc. The camera 121 processes image frames such as still images or motion images, which are obtained by an image sensor in a video call mode or a capturing mode. The processed image frames can then be displayed on a display module 151.

Further, the image frames processed in the camera 121 can be stored in the memory 160 or transmitted to the outside through the radio communication unit 110. The camera 121 may also be provided in plural numbers according to an aspect of a device. In addition, the microphone 123 receives external sound signals using a microphone in a call mode, a record mode, a voice recognition mode, etc. and processes the sound signals as electrical sound data.

For the call mode, the processed sound data can be converted into a format, which can be transmitted to a mobile communication base station, through the mobile communication module 113 and then output. The microphone 123 may also employ a variety of noise removal algorithms for removing noise occurring in the process of receiving external sound signals.

In addition, the user input unit 130 generates key input data, which is input by a user in order to control an operation of the device. The user input unit 130 may include a keypad, a dome switch, a touch pad (static pressure/constant electricity), a jog wheel, a jog switch, a finger mouse or the like. In particular, when a touch pad constitutes a layer structure together with the display module 151, it may be referred to as a touch screen.

The sensing unit 140 senses a current state of the mobile terminal 100, such as a closed state of the mobile terminal 100, the position of the mobile terminal 100, whether a user has touched the touch screen, etc. and generates a sensing signal to control the operation of the mobile terminal 100. For example, when the mobile terminal 100 is a slide phone, the sensing unit 140 can sense whether or not the slide phone is opened. The sensing unit 140 also has a function of sensing whether power is supplied to the power supply unit 190, whether the interface unit 170 is connected to an external device, and so on.

In addition, the output unit 150 is configured to output audio signals, video signals and alarm signals and can include the display module 151, an audio output module 153, an alarm output module 155, etc. The display module 151 displays information processed in the mobile terminal 100. For example, when the mobile terminal is in a call mode, the display module 151 displays UI (User Interface) or GUI (Graphic User Interface) related to a received or placed call.

When the mobile terminal 100 is in a video communication mode or a capturing mode, the display module 151 displays captured and/or received images, a UI, a GUI and/or the like. Further, when the display module 151 and the touch pad have a layer structure and are therefore constituted as a touch screen as described above, the display module 151 can also be used as an input device as well as an output device.

In addition, the display module 151 can include at least one of a liquid crystal display, a thin film transistor-liquid crystal display, an organic light-emitting diode, a flexible display, and a 3D display. Two or more display modules 151 may also exist according to the type of the mobile terminal 100. For example, the mobile terminal 100 can be equipped with an external display module (not shown) and an internal display module (not shown) at the same time.

Further, the audio output module 153 outputs audio data, which is received from the radio communication unit 110 in an incoming call mode, an outgoing call mode, a record mode, a voice recognition mode, an incoming broadcasting mode, etc., or stored in the memory 160. The audio output module 153 also outputs sound signals pertinent to functions, such as a sound of an incoming call signal and a sound of an incoming message, which are performed in the mobile terminal 100. The audio output module 153 can include a speaker, a buzzer or the like.

In addition, the alarm 155 outputs signals to inform events generated in the mobile terminal 100. For example, the events occurring in the mobile terminal 100 can include a received call signal, a received message, a key signal input and the like. The alarm 155 can also output signals to inform the occurrence of events in different ways in addition to the audio signals or the video signals. For example, the alarm 155 can output signals in a vibration form.

Also, when a call signal is received or a message is received, the alarm 155 can output a vibration in order to inform the reception of the call signal or message. Alternatively, when a key signal is input, the alarm 155 can output a vibration as a feedback to the input key signal. Thus, a user can notice the occurrence of an event through this vibration. The signals to inform the occurrence of events can also be output through the display module 151 and/or the audio output module 153.

Further, the memory 160 stores programs used for processing by the controller 180 and can also temporarily store input/output data (for example, phonebooks, messages, still images, motion images, etc.). The memory 160 can include a storage medium, such as a flash memory type, a hard disk type, a multimedia card micro type, memory of a card type (for example, and SD or XD memory, etc.), RAM, and ROM. The mobile terminal 100 can also manage a web storage that performs the storage function of the memory 150 on the Internet.

In addition, the interface unit 170 serves as an interface with external devices coupled to the mobile terminal 100. For example, external devices coupled to the mobile terminal 100 can include wired/wireless headsets, an external charger, wired/wireless data ports, memory cards, card sockets such as SIM (subscriber identification module)/UIM (user identity module) cards, audio I/O (Input/Output) terminals, video I/O terminals, an earphone and so on.

Further, the interface unit 170 can also receive data from the external devices, can be supplied with power, can transfer the received data to respective constituent elements within the mobile terminal 100, and can transmit data within the mobile terminal 100 to the external devices.

Also, the controller 180 generally controls the operation of each element and controls an overall operation of the mobile terminal 100. For example, the controller 180 can perform pertinent control and processes for voice communication, data communication, video telephony and so on. The controller 180 also includes a multimedia play module 181 for playing multimedia.

The multimedia play module 181 may be constructed in hardware within the controller 180 or in software separately from the controller 180. Further, the power supply unit 190 is supplied with external power or internal power and supplies power used for the operation of each constituent element, under the control of the controller 180.

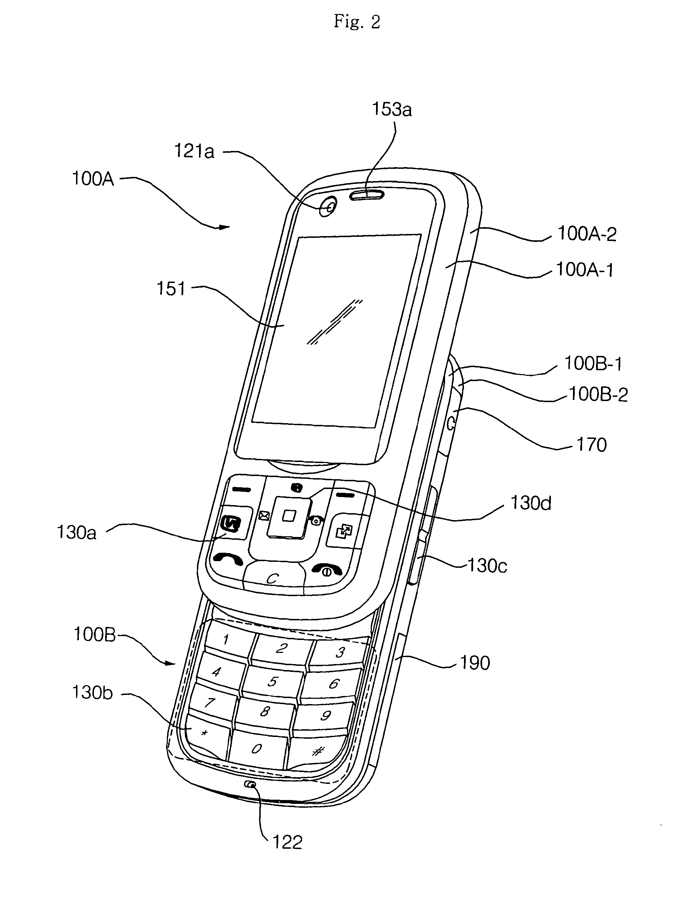

Next, FIG. 2 is a front perspective view of the mobile terminal according to an embodiment of the present invention. Referring to FIG. 2, the mobile terminal includes a first body 100A, and a second body 100B that can slide along at least one direction of the first body 100A.

In addition, a state where the first body 100A is overlapped with the second body 100B is referred to as a closed configuration, and a state where the first body 100A exposes at least part of the second body 100B, as shown in FIG. 2, is referred to as an open configuration.

In the configuration where the mobile terminal 100 is closed, the mobile terminal 100 generally operates in a standby mode, but the standby mode can be released by a user's manipulation. In the configuration where the mobile terminal 100 is open, the mobile terminal 100 generally operates in a call mode, etc., but the standby mode, etc. can be switched by a user's manipulation or after a lapse of a certain time period.

Further, the casing constituting the external shape of the first body 100A includes a first front casing 100A-1 and a first rear casing 100A-2. A variety of electronic components are built in a space formed by the first front casing 100A-1 and the first rear casing 100A-2. Also, at least one intermediate casing may be disposed between the first front casing 100A-1 and the first rear casing 100A-2. The casings can be formed by injecting synthetic resin or can be formed from metal such as STS or Ti, for example.

The display module 151, a first audio output module 153a, a first camera module 121 a, and a first user input unit 130 can be disposed in the first body 100A, and more particularly, the first front casing 100A-1. In addition, as discussed above, the display module 151 includes an LCD, an OLED, etc. for visually displaying information. A touch pad can also be overlapped with the display module 151 in a layer structure, so that the display module 151 can operate as a touch screen and enable the input of information through a user's touch.

Further, the first audio output module 153a can be implemented in the form of a receiver or speaker, and the first camera module 121 a can be constructed to capture images or motion images of a user, etc. Also, the first user input unit 130a receives commands for controlling an operation of the mobile terminal. An entry key 130d having a function corresponding to a mouse function, such as a joystick key, a touch pad, a track ball, a pointing stick, and a finger mouse, can be disposed at the center of the first user input unit 130a as shown in FIG. 2.

In addition, in FIG. 2, a finger mouse that can read a user's finger movement using an optical sensor and perform an operation corresponding to the mouse is illustrated as an example of the entry key 130d. In the same manner as the first body 100A, a casing constituting the external shape of the second body 100B includes a second front casing 100B-1 and a second rear casing 100B-2.

Further, a second user input unit 130b is disposed in the second body 100B, and more particularly, on the front face of the second front casing 100B-1. A third user input unit 130c, the microphone module 123, and the interface unit 170 are disposed in at least one of the second front casing 100B-1 and the second rear casing 100B-2.

The first to third user input units 130a, 130b, and 130c can be generally referred to as a user input unit 130. The user input unit 130 can adopt any type of methods as long as it has a tactile manner, which allows a user to manipulate the user input unit 130 while feeling a tactile sense.

For example, the user input unit 130 can be implemented using a dome switch or a touch pad, which is able to receive commands or information by a user's push or touch manipulation, or can be implemented in a wheel or jog manner, or a manipulation manner using the joystick.

From the viewpoint of the function, the first user input unit 130a is configured to input commands such as start, end, and scroll commands, and the second user input unit 130b is configured to input numbers, text, symbols, etc. The third user input unit 130c can operate as a hot key for activating special functions within the mobile terminal.

In addition, the microphone module 123 can be implemented in an adequate fashion, which is suitable to receive a user's voice, other sound and so on. The interface unit 170 also becomes a passage through which the mobile terminal according to embodiments of the present invention can exchange data with external devices. For example, the interface unit 170 can be at least one of a connector for connecting to an earphone in a wired or wireless manner, a port for local area communication, and a power supply terminal for supplying power to the mobile terminal 100. The interface unit 170 may also be a card socket for receiving an external card, such as a SIM, a UIM and a memory card for storing information.

In addition, the power supply unit 190 for supplying power to the mobile terminal is disposed on the part of the second rear casing 100B-2. The power supply unit 190 can be, for example, a rechargeable battery, and can be detachably attached to the second body 100B for the purpose of recharging, etc.

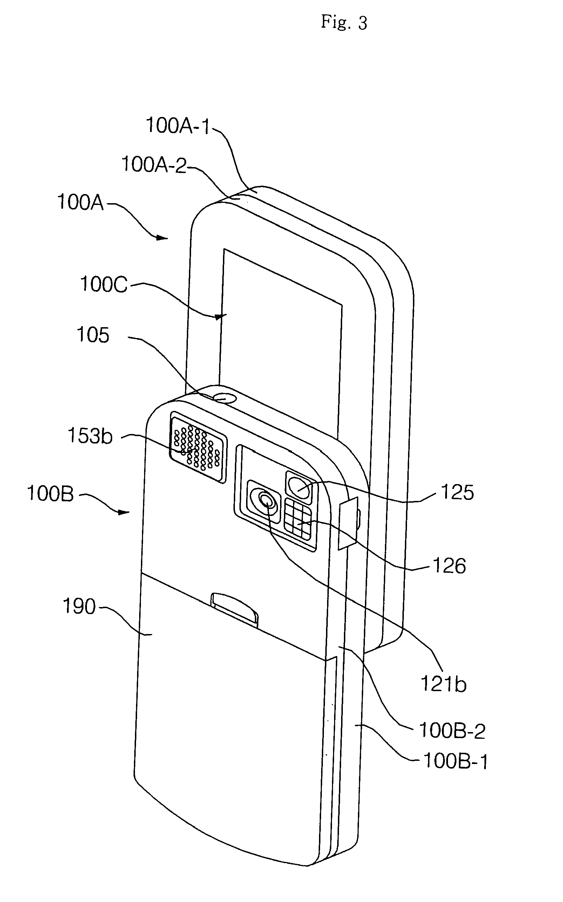

Next, FIG. 3 is a rear perspective view of the mobile terminal shown in FIG. 2. Referring to FIG. 3, a second camera module 121 b is further mounted on the rear face of the second rear casing 100B-2 of the second body 100B. The second camera module 121 b has a photographing direction that is substantially opposite to that of the first camera module 121 a and can have different pixels from that of the first camera module 121 a.

For example, the first camera module 121a may have a lower number of pixels such that it is easy to photograph a user's face and send the photographed face to a counterpart during a video telephony call, etc. The second camera module 121 b may also have a higher number of pixels to photograph more clear pictures that are not transmitted in real-time (i.e., during a video telephony call).

Also, as shown in FIG. 3, a flash 125 and a mirror 126 are disposed adjacent to the second camera module 121b. The flash 125 is configured to illuminate a subject when the subject is photographed using the second camera module 121 b. The mirror 126 is configured to reflect a user when the user has his or her face, etc. is photographed (self photographing) using the second camera module 121b.

In addition, as shown in FIG. 3, a second audio output module 153b is disposed in the second rear casing 100B-2. The second audio output module 153b can realize a stereo function together with the first audio output module 153a and can also be used for a call in a speakerphone mode.

Further, an antenna 105 for receiving broadcasting signals, other than an antenna for an incoming or outgoing call, etc., is disposed on one side of the second rear casing 100B-2, and the antenna 105 can be drawn out from the second body 100B. In addition, a part of a sliding module 100C that slidably couples the first body 100A and the second body 100B can be disposed on the part of the first rear casing 100A-2 of the first body 100A. The other part of the sliding module 100C can be disposed on the part of the second front casing 100B-1 of the second body 100B and have a shape in such a manner that it is not exposed to the outside as shown in FIG. 3.

Further, in the above description, the second camera module 121 b and the like are arranged in the second body 100B, but the present invention is not limited to this arrangement. For example, at least one of the constituent elements 105, 121b, 125, 126, and 152b, which have been described to be arranged in the second rear casing 100B-2 together with the second camera module 121 b, etc., may be disposed in the first body 100A, mainly, in the first rear casing 100A-2.

Hence, in the closed configuration, there is an advantage in that the constituent elements arranged in the first rear casing 100A-2 are protected by the second body 100B. Further, although the second camera module 121b is not separately included, the first camera module 121a can be disposed rotatably so that it can photograph in the photographing direction of the second camera module 121 b.

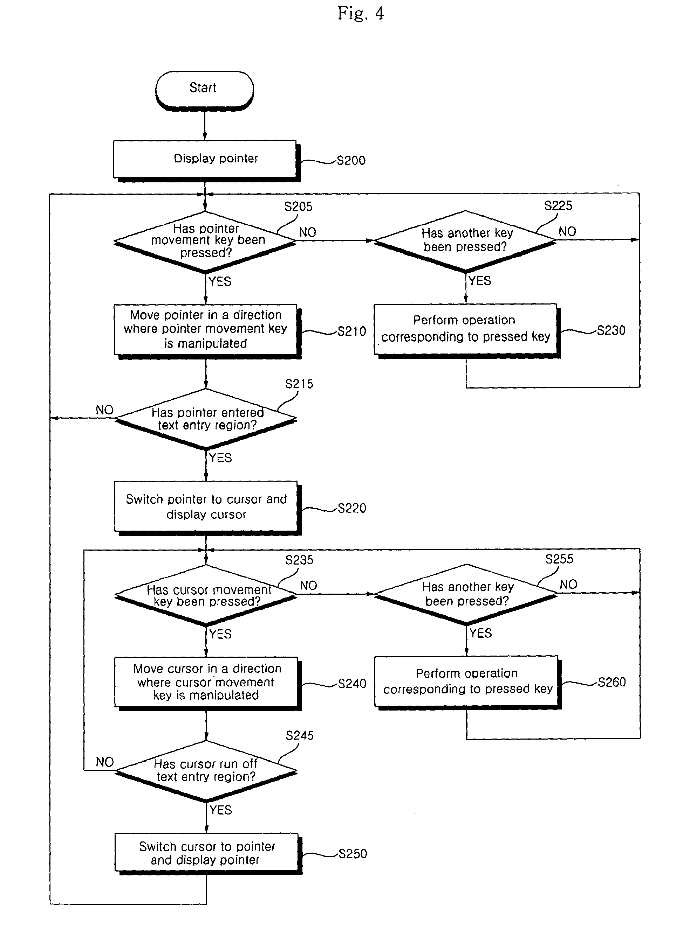

Next, FIG. 4 is a flowchart illustrating a method of controlling an operation of the mobile terminal according to an embodiment of the present invention. Referring to FIG. 4, if the first body 100A slides up in the standby mode or a specific key is pressed through the user input unit 130, the controller 180 controls the display module 151 to display the standby screen, etc. and display the pointer on the screen (S200).

Further, the pointer displayed on the screen is visually moved via a finger mouse, a touch pad, etc. The pointer generally has an arrow shape, but can have any shape desired by a user. Also, if a pointer movement key configured to move the pointer, such as the finger mouse, is pressed (Yes in S205), the controller 180 controls the pointer to be moved in a direction where the pointer movement key is manipulated (S210). Here, the pointer may have its shape switched and displayed according to an operating state of the mobile terminal. For example, when the pointer points to an object, the pointer can be switched to a palm shape, and while a requested task is being performed, the pointer can be switched to a swizzle shape.

If another key other than the pointer movement key is pressed in step S205 (S225), the controller 180 executes an operation corresponding to the pressed key (S230). A key other than the pointer movement key can include a key for screen control such as a screen movement or scrolling feature, a key for switching menus or communication, and so on. Further, an item indicated by the pointer can be selected by pressing the pointer movement key. In other words, in order for a user to select or execute an item indicated by the pointer, the user has to press a key corresponding to a mouse select button together with the movement of the pointer.

The controller 180 then determines if the pointer enters a text entry region, such as a memo pad or a text entry window for writing a short message (S215). When the pointer enters the text entry region, (Yes in S215), the controller 180 switches the pointer to a cursor indicating a text entry position and displays the cursor (S220).

At this time, the cursor is an indicator indicating a position where a user can input text on the screen of the display module 151. The cursor indicating the text input position can have a flickering underline or a perpendicular straight bar, or can have any shape desired by a user.

In addition, the user can enter text into the text entry region without having to input an additional operational command. That is, as soon as the pointer is switched to the cursor upon entering the text entry region, the user can immediately begin inputting text without having to first select an enter key such as clicking the left mouse button.

Also, if a cursor movement key configured to move the cursor, such as the finger mouse or the direction key is pressed (Yes in S235), the controller 180 controls the cursor to be moved in a direction where the cursor movement key is manipulated (S240). The cursor movement key and the above pointer movement key can be the same entry key or different entry keys. When the finger mouse is used as both the pointer movement key and the cursor movement key, a distance where the pointer, which is moved corresponding to the finger mouse, is moved may be set differently from that where the cursor, which is moved corresponding to the finger mouse, is moved although the finger mouse is manipulated within the same range.

If another key other than the cursor movement key is pressed (Yes in S255), the controller 180 executes an operation, corresponding to the pressed key (S260). A key other than the cursor movement key can include a key for a text input, a key for menu switch or communication, and so on.

If the cursor is moved in a direction where the cursor movement key is manipulated and runs off the text entry region (Yes in S245), the controller 180 controls the cursor to be switched back to the pointer (S250). The above process is then performed repeatedly.

Further, when the pointer is moved into the text entry region, the pointer is displayed as the cursor, and the input operation is automatically set such that the user can input text without having to first click a mouse button, enter an additional input command, etc. In other regions on the screen other than the text entry region, the cursor is switched back to the pointer.

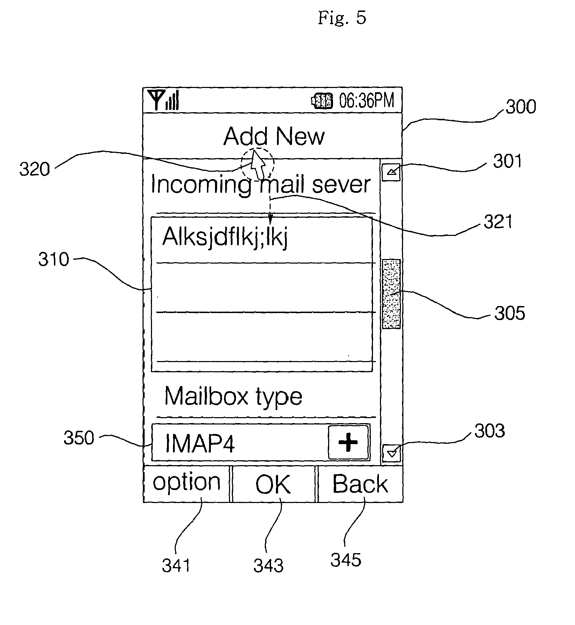

Next, FIGS. 5 to 9 are overviews illustrating features described above with respect to FIG. 4. For example, FIG. 5 illustrates a screen 300 displayed on the display module 151. As shown, a text entry region 310, such as an entry window for text input, is displayed at the center of the screen 300. Further, indicator icons are displayed at the top of the screen 300. A vertical scroll bar 305 and scroll arrows 301 and 303 for scrolling contents displayed on the screen 300 up and down are also displayed on the left side of the screen 300.

In addition, a window 350 for selecting menus, and menu items, such as an option 341 for selecting menu options, an OK button 343 for selecting menus or executing selected menus, and a Back button 345 for moving to a previous menu are displayed at the bottom of the screen 300.

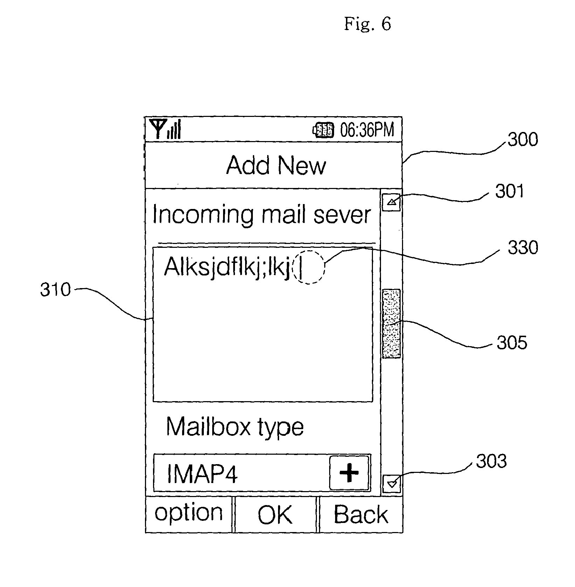

As shown in FIG. 5, a pointer 320 is moved in a direction towards the text entry region 310 along the direction of the arrow 321. The pointer 320 displayed on the screen 300 has an arrow shape and is used to select specific subjects or menu items within the screen 300. When the pointer 320 is moved in the direction indicated by the reference numeral 321 and then moved into the text entry region 310, the pointer 320 is switched to a cursor 330 indicating a text input position as shown in FIG. 6. Further, as discussed above, the cursor 330 can be moved according to a text input or the manipulation of the cursor movement key.

In addition, in FIG. 6, the user can immediately begin entering text into the text entry region 310 without having to enter an additional input command such as pressing the left mouse button, etc. That is, no further user input command is required, because the controller 180 automatically changes the operation of the text entry region 310 into a text input mode such that the user can immediately begin inputting text. Thus, an additional input command is eliminated and the user is less confused about whether they can enter text into the text entry region 310.

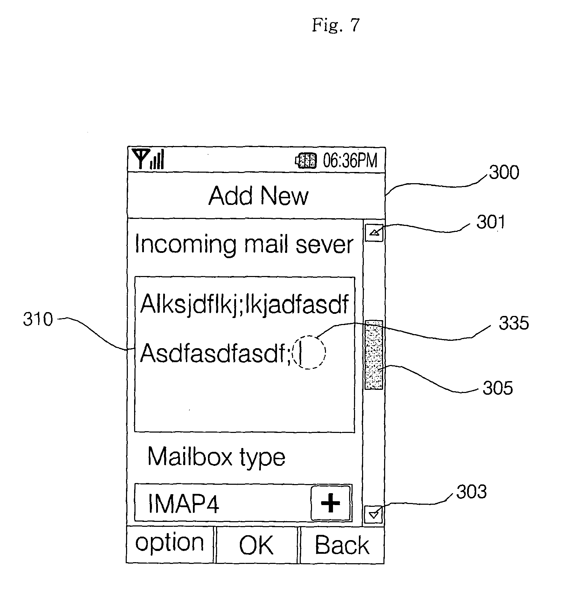

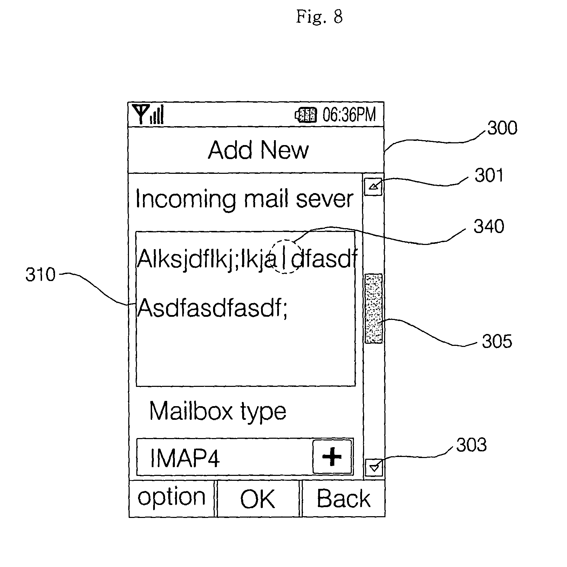

FIG. 7 illustrates the location of a cursor 335 being moved in response to the user inputting text. That is, as the user enters text information into the text entry regions, the cursor 335 follows along with the entered text information. FIG. 8 illustrates that the location of a cursor 340 is moved when the cursor movement key configured to move the cursor is manipulated. That is, the user manipulates the cursor movement key to move the cursor back over text already input such that the user can conveniently change text information that has already been input.

As described above, the cursors 335 and 340 are moved in response to a text input or when the cursor movement key is manipulated. Further, as shown, the pointer is not displayed on the screen 300 when the cursors 335 and 340 are displayed. Alternatively, the pointer may be displayed on the screen 300 when a specific key is manipulated.

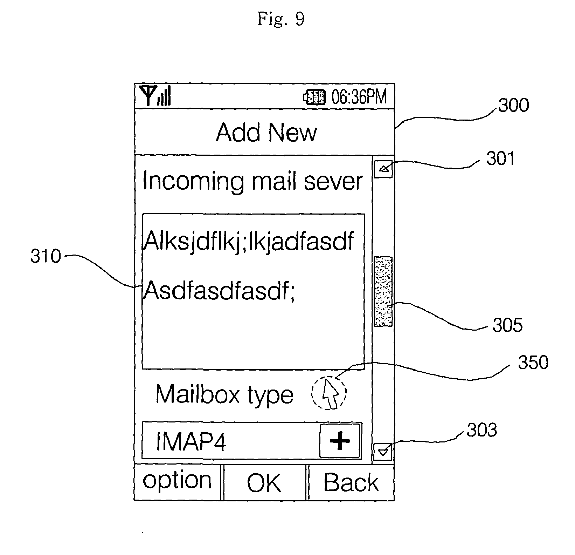

In addition, FIG. 9 illustrates that when the cursor is moved to the bottom of and outside of the text entry region 310, the cursor is switched back to a pointer 350. Thus, the user can easily see that they can no longer enter text information into the text entry region 310.

Further, the above-described mobile terminal may also include a proximity sensor that senses a proximity of a pointing object from the screen of the terminal. Thus, the user can move his or her finger (or any other stylus) in front of the display, and the proximity sensor senses the location and direction of the user's finger. Therefore, the user can move the pointer around the display without actually touching the display.

As described above, the pointer and the cursor can be automatically switched and displayed according to which place on the screen is the pointer located. Accordingly, a user does not need to switch the pointer to the cursor and avoids confusion about when they can or can't enter text.

Further, the mobile terminal and the operation method of the same according to the present invention are not limited to the construction and method described in connection with the above embodiments. That is, all or part of the above embodiments can be combined selectively so that the embodiments can be modified in various ways.

In addition, the above description refers to a sliding type mobile terminal, but the present invention relates to several types of mobile terminals such as the folding type, the bar type, and the swing type. The present invention also applies to a laptop, a personal digital assistant (PDA), a standalone computer, devices for digital broadcasting, PDA (Personal Digital Assistants), a PMP (Portable Multimedia Player), navigation devices and the like.

Also, the present invention can be implemented in a recording medium using a processor-readable code, which is readable by a processor provided in a mobile terminal, such as MSM (Mobile Station Modem). The recording medium readable by the processor can include all kinds of recording devices in which a processor-readable data is stored. For example, the recording medium readable by the processor can include ROM, RAM, CD-ROM, magnetic tapes, floppy disks, optical data storages, and so on, and also include carrier waves such as transmission over an Internet. Further, the recording medium readable by the processor can be distributed over computer systems connected through a network, and codes readable by the processor can be stored and executed in a distributed manner.

As described above, according to embodiments of the present invention, when a pointer is moved and then enters a specific area of a screen, the pointer is switched to a cursor and then displayed. In other regions on the screen other than a specific region, the cursor can be switched back to the pointer and then displayed. Accordingly, the pointer can be switched to the cursor and then displayed or the cursor can be switched to the pointer again and then displayed, without additional key control.

While the invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A method of controlling an operation of a terminal, the method comprising:
displaying a pointer on a screen of the terminal;
moving a display location of the pointer towards a text input region on the screen;
switching the pointer to a cursor indicating a text input position within the text input region when the pointer enters the text input region; and
allowing text to be input into the text input region without an additional command when the pointer is switched to the cursor indicating the text input position.

2. The method of claim 1, wherein the moving step moves the pointer towards the text input region via any one of a joystick key, a touch pad, a track ball, a pointing stick, a finger mouse, and a direction key.

3. The method of claim 1, wherein the screen of the mobile terminal comprises a touchscreen, and the moving step comprises moving the pointer towards the text input region by performing a touching and dragging operation on the touchscreen.

4. The method of claim 1, further comprising:
sensing a proximity of a pointing object from the screen of the terminal,
wherein the moving step moves the cursor based on the sensed proximity of the pointing object.

5. The method of claim 1, further comprising:
returning the cursor indicating the text input position to the pointer when the cursor is moved out of the text input region.

6. The method of claim 1, further comprising:
selecting a shape of the pointer based on a user command.

7. The method of claim 1, further comprising:
determining an operating state of the terminal; and
changing a shape of the pointer based on the operating state of the terminal.

8. The method of claim 1, wherein the allowing step allows the text to be input into the text input region without the additional command such that when the pointer is changed to the cursor, a user can immediately input text into the text region without having to first click or manipulate an additional input operational function on the terminal.

9. The method of claim 1, wherein the terminal comprises one of a mobile terminal, a laptop, a personal digital assistant (PDA), a standalone computer, and a navigation terminal.

10. A terminal, comprising:
a display screen configured to display a pointer;
an input unit configured to move a display location of the pointer towards a text input region on the screen; and
a controller configured to switch the pointer to a cursor indicating a text input position within the text input region when the pointer enters the text input region, and to allow text to be input into the text input region without an additional command when the pointer is switched to the cursor indicating the text input position.

11. The terminal of claim 10, wherein the input unit includes any one of a joystick key, a touch pad, a track ball, a pointing stick, a finger mouse, and a direction key.

12. The terminal of claim 10, wherein the screen of the mobile terminal comprises a touchscreen, and
wherein the input unit is further configured to move the pointer towards the text input region based on a touching and dragging operation performed on the touchscreen.

13. The terminal of claim 10, further comprising:
a proximity sensor configured to sense a proximity of a pointing object from the screen of the terminal,
wherein the input unit is further configured to move the cursor based on the sensed proximity of the pointing object.

14. The terminal of claim 10, wherein the controller is further configured to return the cursor indicating the text input position to the pointer when the cursor is moved out of the text input region.

15. The terminal of claim 10, wherein the controller is further configured to select a shape of the pointer based on a user command.

16. The terminal of claim 10, wherein the controller is further configured to determine an operating state of the terminal, and to change a shape of the pointer based on the operating state of the terminal.

17. The terminal of claim 10, wherein the controller is further configured to allow the text to be input into the text input region without the additional command such that when the pointer is changed to the cursor, a user can immediately input text into the text region without having to first click or manipulate an additional input operational function on the terminal.

18. The terminal of claim 10, wherein the terminal comprises one of a mobile terminal, a laptop, a personal digital assistant (PDA), a standalone computer, and a navigation terminal.
